# EUROPÄISCHE PATENTSCHRIFT

(11) **EP 3 248 179 B1**
(45) Veröffentlichungstag und Bekanntmachung des Hinweises auf die Patenterteilung: **20.02.2019**
(21) Anmeldenummer: 15807835.2
(22) Anmeldetag: 03.12.2015
(51) Int. Cl.: G08B 21/06

(54) **VERFAHREN UND VORRICHTUNG ZUM ERKENNEN VON SEKUNDENSCHLAF EINES FAHRERS EINES FAHRZEUGS**
METHOD AND APPARATUS FOR RECOGNISING MICROSLEEP IN A DRIVER OF A VEHICLE
PROCÉDÉ ET DISPOSITIF DE DÉTECTION D'UN MICRO-SOMMEIL D'UN CONDUCTEUR D'UN VÉHICULE

(30) Priorität: 19.01.2015 DE 102015200697
(43) Veröffentlichungstag der Anmeldung: 29.11.2017
(73) Patentinhaber: Robert Bosch GmbH, 70442 Stuttgart (DE)
(72) Erfinder: STOLTZ, Achim, 70378 Stuttgart (DE); WULF, Felix, 71636 Ludwigsburg (DE)
(86) Internationale Anmeldenummer: PCT/EP2015/078450
(87) Internationale Veröffentlichungsnummer: WO 2016/116201

(56) Entgegenhaltungen:
- US-A1- 2006 204 041
- US-A1- 2008 101 659
- US-A1- 2011 205 350
- US-A1- 2012 002 843
- US-A1- 2013 076 885

## Beschreibung

### Stand der Technik

Die vorliegende Erfindung bezieht sich auf ein Verfahren zum Erkennen von Sekundenschlaf eines Fahrers eines Fahrzeugs, auf eine entsprechende Vorrichtung sowie auf ein entsprechendes Computerprogramm.

Schläfrigkeit und Sekundenschlaf am Steuer führen häufig zu gefährlichen Situationen oder Unfällen. Heutige Schläfrigkeitserkenner geben eine Warnung aus, wenn der Fahrer einen gewissen Schläfrigkeitsgrenzwert überschreitet. Die Warnung kann optisch beispielsweise durch eine angezeigte Kaffeetasse oder akustisch erfolgen. Diese Warnung kann vom Fahrer jedoch ignoriert werden.

Heutige Schläfrigkeitsassistenzsysteme schätzen die Schlafanfälligkeit des Fahrers lediglich indirekt aus seinem Fahrverhalten. Aus dem Lenkverhalten des Fahrers wird ein Fahrprofil erstellt und bei einer längeren Fahrt mit dem aktuellen Fahrverhalten verglichen. Gibt es längere Zeit keine Veränderung des Lenkwinkels und anschließend einen starken Lenkausschlag, dann wird dies als Dead-Band-Event (DBE) registriert. Wenn sich diese Dead-Band-Events häufen, wird der Fahrer als schläfrig klassifiziert.

Ebenfalls sind Systeme bekannt, die auf Daten einer Videokamera den momentanen Öffnungsgrad der Augen erkennen können (beispielsweise SmartEye, Facelab, etc.). Es sind ebenfalls Systeme bekannt, die auf Basis von Videosignalen die Identität eines Menschen erkennen können.

Die Druckschrift US 2011/205350 A1 offenbart eine Aufgen-offen- oder Augengeschlossen-Detektionsvorrichtung, eine Augenöffnungsgrad-Schätzungsvorrichtung und ein Programm.

Die Druckschrift US 2013/0073885 A1 offenbart eine Augenschluss-Detektionsvorrichtung, die eine strukturierte Beleuchtung verwendet.

### Offenbarung der Erfindung

Vor diesem Hintergrund werden mit dem hier vorgestellten Ansatz ein Verfahren zum Erkennen von Sekundenschlaf eines Fahrers eines Fahrzeugs, weiterhin eine Vorrichtung, die dieses Verfahren verwendet sowie schließlich ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Sekundenschlaf kann mit Hilfe von videobasierter Fahrerbeobachtung und Lidöffnungsdetektion erkannt werden. Dabei kann bereits eine Warnung vor dem Eintreten oder vor dem Beginn von Sekundenschlaf ausgegeben werden.

Es wird ein Verfahren vorgestellt zum Erkennen von Sekundenschlaf eines Fahrers eines Fahrzeugs, wobei das Verfahren die folgenden Schritte aufweist:
Einlesen einer Augenschlussinformation über einen Augenparameter des Fahrers, wobei die Augenschlussinformation eine erste Augenlidposition für ein maximales Augenöffnungsniveau und/oder eine zweite Augenlidposition für ein minimales Augenöffnungsniveau für den Fahrer repräsentiert;
Klassieren einer aktuellen Augenlidposition eines Augenlids des Fahrers unter Verwendung der Augenschlussinformation, um eine Augenöffnungsinformation zu erhalten, die einen offenen Zustand der Augen oder einen geschlossenen Zustand der Augen repräsentiert; und
Ermitteln eines Schlaferkennungswerts, der eine Gefahr für ein Auftreten eines Sekundenschlafs repräsentiert, wobei der Schlaferkennungswert unter Verwendung der aktuellen Augenlidposition und/oder der Augenöffnungsinformation wobei der Sekundenschlaf erkannt wird, wenn der Schlaferkennungswert einen Schwellwert zumindest während einer vorbestimmten Zeitdauer überschreitet,
dadurch gekennzeichnet, dass
vor dem Schritt des Einlesens in einem Schritt des Identifizierens der Fahrer identifiziert wird und die Augenschlussinformation unter Verwendung einer Information über den identifizierten Fahrer, insbesondere aus einer Datenbank, bereitgestellt wird.

Unter Sekundenschlaf kann eine Müdigkeitsattacke verstanden werden. Sekundenschlaf kann hierbei insbesondere ein ungewolltes Einnicken für mehrere Sekunden (beispielsweise mit zu einem bestimmten Grad geschlossenen Augen) bezeichnen. Eine Augenschlussinformation kann eine Augenöffnung oder einen Abstand eines oberen Augenlids eines Auges des Fahrers von einem unteren Augenlid des Auges beschreiben. Unter einer Augenbewegungsinformation kann auch eine Augenschlussinformation verstanden werden. Dabei kann die Augenschlussinformation einen Wert eines maximalen Abstands, insbesondere bei geöffneten Augen beziehungsweise maximales Augenöffnungsniveau und einen weiteren Wert eines minimalen Abstands, insbesondere bei geschlossenen Augen beziehungsweise minimales Augenöffnungsniveau, umfassen. So kann unter dem Augenparameter ein Abstand zwischen dem oberen Lid und dem unteren Lid eines Auges des Fahrers verstanden werden. Daraufhin kann eine aktuelle Augenlidposition, die unter Verwendung der Augenschlussinformation ein momentanes Augenöffnungsniveau, beispielsweise in Prozent, beschreibt, ausgewertet werden und somit klassiert werden. So kann im Schritt des Klassierens eine, insbesondere binäre, Unterscheidung zwischen offenem und geschlossenem Auge getroffen werden. Der Schlaferkennungswert kann ein Maß oder eine Wahrscheinlichkeit für eine Müdigkeitsattacke oder ein ungewolltes Einnicken repräsentieren. Dabei kann ein Schwellwert für eine Warnung definiert sein oder definiert werden. Beispielsweise kann bei einem Schlaferkennungswert von mehr als 50% oder mehr als 75% ein Sekundenschlaf oder ein bevorstehender Sekundenschlaf oder ein zu hohes Risiko für einen Sekundenschlaf erkannt werden. Der Grenzwert oder Schwellwert kann dabei je nach Risikopotenzial gewählt werden, beispielsweise zwischen 10% und 99% liegen. Dabei kann der Schlaferkennungswert während einer Zeitdauer von beispielsweise 0,5 Sekunden, 1 Sekunde, 30 Sekunden oder einer Minute ausgewertet werden. So können die Signale oder Werte während der Zeitdauer ausgewertet werden.

Dabei kann die Zeitdauer an eine vordefinierte Robustheit und eine vordefinierte Schnelligkeit des Verfahrens angepasst sein oder angepasst werden.

Vor dem Schritt des Einlesens wird in einem Schritt des Identifizierens der Fahrer identifiziert. Im Schritt des Einlesens oder alternativ im Schritt des Identifizierens wird die Augenschlussinformation unter Verwendung einer Information über den identifizierten Fahrer, insbesondere aus einer Datenbank, bereitgestellt werden oder eingelesen. So kann der Fahrer videobasiert erkannt werden, oder anhand seines Fahrzeugschlüssels oder anhand eines eingegebenen Identifikationsschlüssels. Vorteilhaft kann das Verfahren dadurch schneller einen Sekundenschlaf oder eine Müdigkeitsattacke erkennen.

Vor dem Schritt des Einlesens kann in einem Schritt des Auswertens die aktuelle Augenlidposition über einen Initialisierungszeitraum ausgewertet werden, um die Augenschlussinformation zu bestimmen. Dabei kann der Initialisierungszeitraum beispielsweise zumindest eine Minute dauern. Alternativ kann der Initialisierungszeitraum fünf Minuten betragen. So kann der Initialisierungszeitraum eine Dauer zwischen 15 Sekunden und zehn Minuten betragen. So kann das Verfahren für jeden Fahrer ohne Vorwissen ausgeführt werden.

Im Schritt des Ermittelns kann der Schlaferkennungswert unter Verwendung einer Anzahl einer geschlossene Augen repräsentierenden Augenöffnungsinformation für den Fahrer während der Zeitdauer und/oder einer Dauer geschlossene Augen repräsentierenden Augenöffnungsinformation während der Zeitdauer ermittelt wird.

Im Schritt des Ermittelns kann der Schlaferkennungswert unter Verwendung einer Lidschlussdynamik und/oder einer Lidschlussbeschleunigung ermittelt werden. Dabei kann eine absolute Lidschlussbeschleunigung oder eine Lidschlussbeschleunigung der Beschleunigung verwendet werden. Dabei repräsentiert die Lidschlussbeschleunigung einen Wert, der eine Beschleunigung des Augenlids des Fahrers repräsentiert. Vorteilhaft kann ein langsamer Augenschluss erkannt werden. So kann beispielsweise frühzeitig eine Gefahr für einen Sekundenschlaf erkannt werden. Dabei kann die Lidschlussbeschleunigung beispielsweise in einer Zeitdauer kleiner oder gleich einer halben Sekunde ausgewertet werden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Der hier vorgestellte Ansatz wird nachstehend anhand der beigefügten Zeichnungen beispielhaft näher erläutert. Es zeigen:
Der hier vorgestellte Ansatz wird nachstehend anhand der beigefügten Zeichnungen beispielhaft näher erläutert. Es zeigen:
Fig. 1 eine schematische Darstellung eines Fahrzeugs mit einem Fahrer und einer Vorrichtung gemäß einem Ausführungsbeispiel der vorliegenden Erfindung;
Fig. 2 eine vereinfachte Darstellung eines Auges eines Fahrers;
Fig. 3 eine vereinfachte Darstellung eines Augenschlusssignals gemäß einem Ausführungsbeispiel der vorliegenden Erfindung;
Fig. 4 eine vereinfachte Darstellung eines Augenschlusssignals gemäß einem Ausführungsbeispiel der vorliegenden Erfindung;
Fig. 5 eine vereinfachte Darstellung eines Augenschlusssignals gemäß einem Ausführungsbeispiel der vorliegenden Erfindung;
Fig. 6 eine vereinfachte Darstellung eines Blickrichtungssignals gemäß einem Ausführungsbeispiel der vorliegenden Erfindung;
Fig. 7 ein Ablaufdiagramm eines Verfahrens gemäß einem Ausführungsbeispiel der vorliegenden Erfindung; und
Fig. 8 ein Blockdiagramm einer Vorrichtung gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

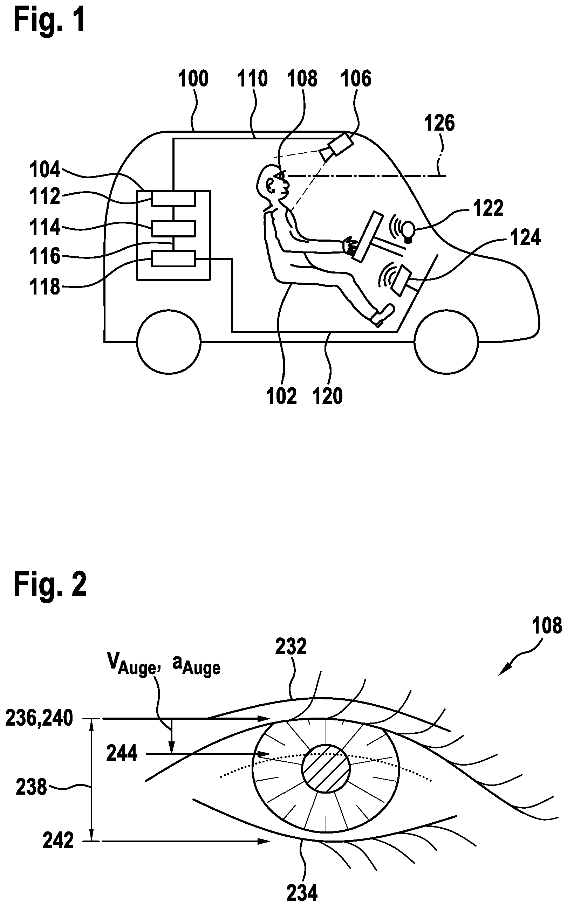

Fig. 1 zeigt eine schematische Darstellung eines Fahrzeugs 100 mit einem Fahrer 102 und einer Vorrichtung 104 gemäß einem Ausführungsbeispiel der vorliegenden Erfindung. Eine im Frontbereich des Fahrzeugs 100 angeordnete Augenparameter-Erfassungseinrichtung 106 ist ausgebildet, die beiden Augen 108 des Fahrers 102 zu erfassen und eine Augenschlussinformation 110 bereitzustellen. Die Augenschlussinformation 110 repräsentiert eine erste Augenlidposition für ein maximales Augenöffnungsniveau und eine zweite Augenlidposition für ein minimales Augenöffnungsniveau für den Fahrer 102.

Die Vorrichtung 104 zum Erkennen von Sekundenschlaf des Fahrers 102 weist eine Schnittstelle 112 zum Einlesen der Augenschlussinformation 110 über zumindest einen Augenparameter des Fahrers 102 auf. Eine Einrichtung 114 zum Klassieren ist ausgebildet, eine aktuelle Augenlidposition eines Augenlids des Fahrers 102 unter Verwendung der Augenschlussinformation110 zu klassieren, um eine Augenöffnungsinformation 116 zu erhalten, die einen offenen Zustand der Augen oder einen geschlossenen Zustand der Augen binär darstellt beziehungsweise zwischen den beiden genannten Zuständen unterscheidet.

Weiterhin weist die Vorrichtung 104 eine Einrichtung 118 zum Ermitteln eines Schlaferkennungswerts 120 auf. Der Schlaferkennungswert 120 repräsentiert ein Maß für ein Auftreten eines Sekundenschlafs, wobei der Schlaferkennungswert 120 unter Verwendung der aktuellen Augenlidposition und/oder der Augenöffnungsinformation 116 und einer Augenöffnungsgeschwindigkeit und/oder einer Blickrichtung 126 des Fahrers 102 und/oder davon abgeleiteten Informationen ermittelt wird. Der Sekundenschlaf wird erkannt, wenn der Schlaferkennungswert 120 einen Schwellwert zumindest während einer vorbestimmten Zeitdauer überschreitet.

Das Fahrzeug 100 weist eine optische Warneinrichtung 122 sowie eine akustische Warneinrichtung 124 auf, die ausgebildet sind, eine Gefahr durch ein hohes Risiko für einen Sekundenschlaf oder einen Sekundenschlaf für den Fahrer 102 optisch respektive akustisch anzuzeigen.

In Ausführungsbeispielen ist die Augenparameter-Erfassungseinrichtung 106 ausgebildet, eine aktuelle Augenlidposition, eine Geschwindigkeit eines Augenlids bei einer Augenöffnung, eine Beschleunigung des Augenlids bei der Augenöffnung und/oder die aktuelle Blickrichtung 126 des Fahrers 102 zu erfassen und davon Informationen abzuleiten, wie eine momentane Augenöffnung, das heißt einen Abstand zwischen oberem und unterem Augenlid, eine erste Augenlidposition für ein maximales Augenöffnungsniveau und eine zweite Augenlidposition für ein minimales Augenöffnungsniveau für den Fahrer 102 oder ein momentanes Augenöffnungsniveau. Die hier aufgezählten Informationen können durch die Augenschlussinformation 110 repräsentiert sein, oder als gesonderte Signale oder Informationen bereitgestellt werden und über die Schnittstelle 112 eingelesen werden. Die Augenparameter-Erfassungseinrichtung 106 wird so auch als "Eye Closure Preprocessing" oder ECP bezeichnet.

Fig. 2 zeigt eine vereinfachte Darstellung eines Auges 108 eines Fahrers. Bei dem Fahrer kann es sich um den in Fig. 1 beschriebenen Fahrer 102 handeln. Das Auge weist ein oberes Augenlid 232 und ein unteres Augenlid 234 auf. Aus der Position 236 der Augenlider, insbesondere im Verhältnis zueinander, kann ein Abstand 238 zwischen dem oberen Augenlid 232 und dem unteren Augenlid 234 bestimmt werden. Wenn über einen längeren Zeitraum, beispielsweise fünf Minuten, die Position 236 der Augenlider 232, 234 oder der Abstand 238 der Augenlider 232, 234 bestimmt wird, kann darüber eine erste Augenlidposition 240 für ein maximales Augenöffnungsniveau und eine zweite Augenlidposition 242 für ein minimales Augenöffnungsniveau für das Auge 108 bestimmt werden.

In der Darstellung in Fig. 2 entspricht der Einfachheit halber die erste Augenlidposition 240 der dargestellten Position 236 des oberen Augenlids 232. Eine gestrichelte Linie durch die Pupille des Auges 108 zeigt eine aktuelle Augenlidposition 244. Dabei bewegt sich das Augenlid 232 mit einer Augenöffnungsgeschwindigkeit v_{Auge} beziehungsweise beschleunigt mit einer Lidschlussbeschleunigung a_{Auge}.

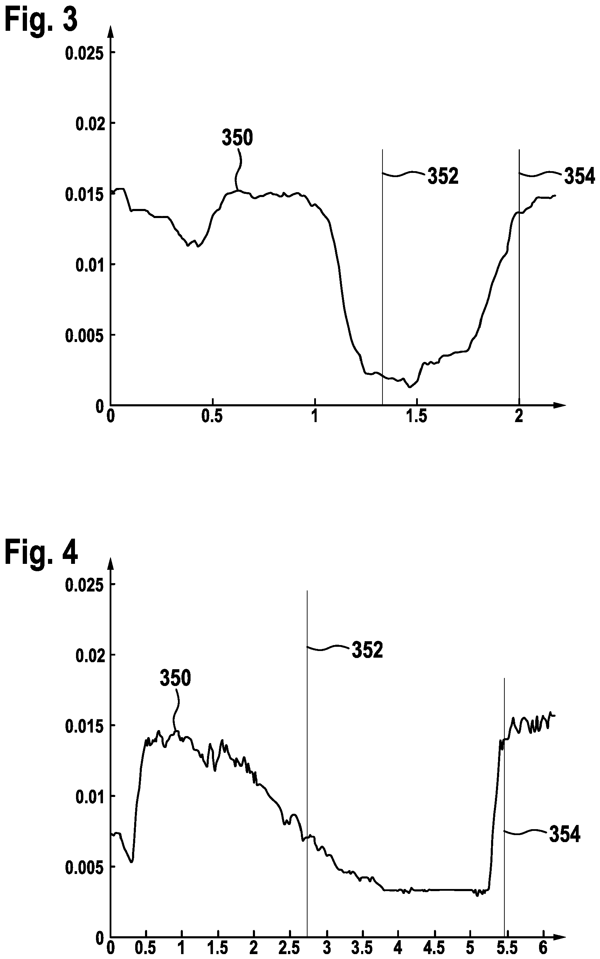

Fig. 3 zeigt eine vereinfachte Darstellung eines Augenschlusssignals 350 gemäß einem Ausführungsbeispiel der vorliegenden Erfindung. In einem kartesischen Koordinatensystem ist auf der Abszisse eine Zeit in Sekunden und auf der Ordinate ein Abstand zwischen dem oberen Augenlid und dem unteren Augenlid in Metern dargestellt. Bei dem Abstand kann es sich um den in Fig. 2 dargestellten Abstand 238 zwischen dem oberen Augenlid 232 und dem unteren Augenlid 234 eines Auges eines in Fig. 1 dargestellten Fahrers handeln. Das Augenschlusssignal 350 zeigt also eine Augenöffnung oder einen Abstand der Augenlider zueinander über die Zeit. Eine erste senkrechte Linie 352 zeigt den Beginn eines Sekundenschlafs, eine weitere senkrechte Linie 354 zeigt ein Ende des Sekundenschlafs. Die im hier gezeigten Ausführungsbeispiel dargestellte Zeitdauer des Sekundenschlafs beträgt 0,6667 Sekunden.

Das in Fig. 3 dargestellte Augenschlusssignal 350 stellt ein Beispiel für ein Augenschlusssignal 350 bei einem Sekundenschlaf dar.

Fig. 4 zeigt eine vereinfachte Darstellung eines Augenschlusssignals 350 gemäß einem Ausführungsbeispiel der vorliegenden Erfindung. Wie in Fig. 3 ist in einem kartesischen Koordinatensystem auf der Abszisse eine Zeit in Sekunden und auf der Ordinate ein Abstand zwischen dem oberen Augenlid und dem unteren Augenlid in Metern dargestellt. Das in Fig. 4 dargestellte Augenschlusssignal 350 stellt ein Beispiel für ein Augenschlusssignal 350 bei einem langsamen Augenschluss dar. Eine erste senkrechte Linie 352 zeigt den Beginn eines Sekundenschlafs, eine weitere senkrechte Linie 354 zeigt ein Ende des Sekundenschlafs. Die im hier gezeigten Ausführungsbeispiel dargestellte Zeitdauer des Sekundenschlafs beträgt 2,7333 Sekunden.

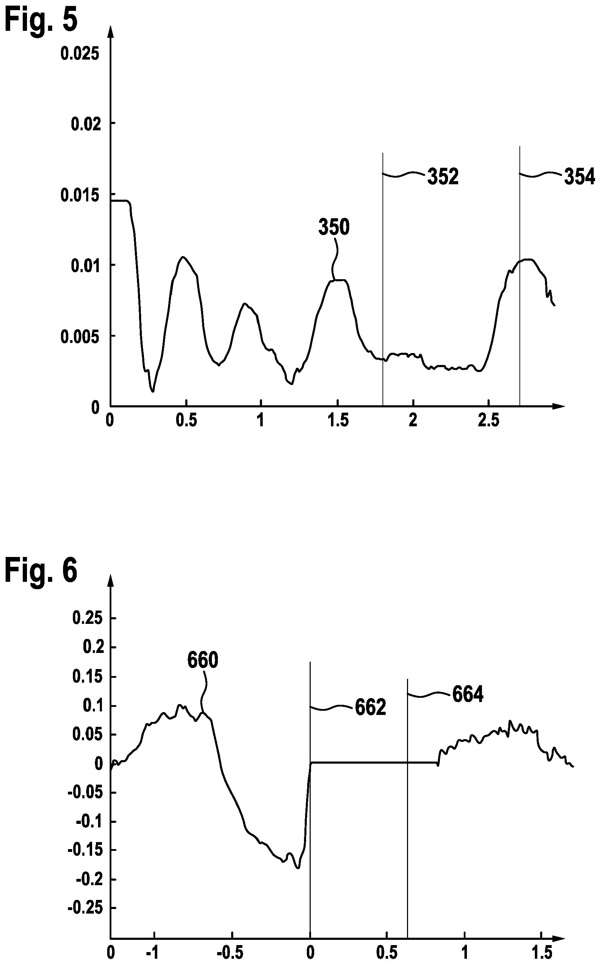

Fig. 5 zeigt eine vereinfachte Darstellung eines Augenschlusssignals 350 gemäß einem Ausführungsbeispiel der vorliegenden Erfindung. Wie in Fig. 3 und Fig. 4 ist in einem kartesischen Koordinatensystem auf der Abszisse eine Zeit in Sekunden und auf der Ordinate ein Abstand zwischen dem oberen Augenlid und dem unteren Augenlid in Metern dargestellt. Das in Fig. 5 dargestellte Augenschlusssignal 350 stellt ein Beispiel für ein Augenschlusssignal 350 bei einem "Kampf mit zufallenden Augen" dar. Eine erste senkrechte Linie 352 zeigt den Beginn eines Sekundenschlafs, eine weitere senkrechte Linie 354 zeigt ein Ende des Sekundenschlafs. Die im hier gezeigten Ausführungsbeispiel dargestellte Zeitdauer des Sekundenschlafs beträgt 0,9 Sekunden.

Fig. 6 zeigt eine vereinfachte Darstellung eines Blickrichtungssignals 660 gemäß einem Ausführungsbeispiel der vorliegenden Erfindung. In einem kartesischen Koordinatensystem ist auf der Abszisse eine Zeit in Sekunden und auf der Ordinate eine Blickrichtung dargestellt. Das in dem kartesischen Koordinatensystem dargestellte Blickrichtungssignal 660 zeigt also eine Blickrichtung über die Zeit. Durch zwei senkrechte Linien 662, 664 ist ein Zeitintervall hervorgehoben - von 0 Sekunden bis 0,6 Sekunden auf der Abszisse - in dem ein Beispiel für horizontal abdriftende Pupillen zu erkennen ist. Die Blickrichtung ändert sich in dem Zeitraum nicht.

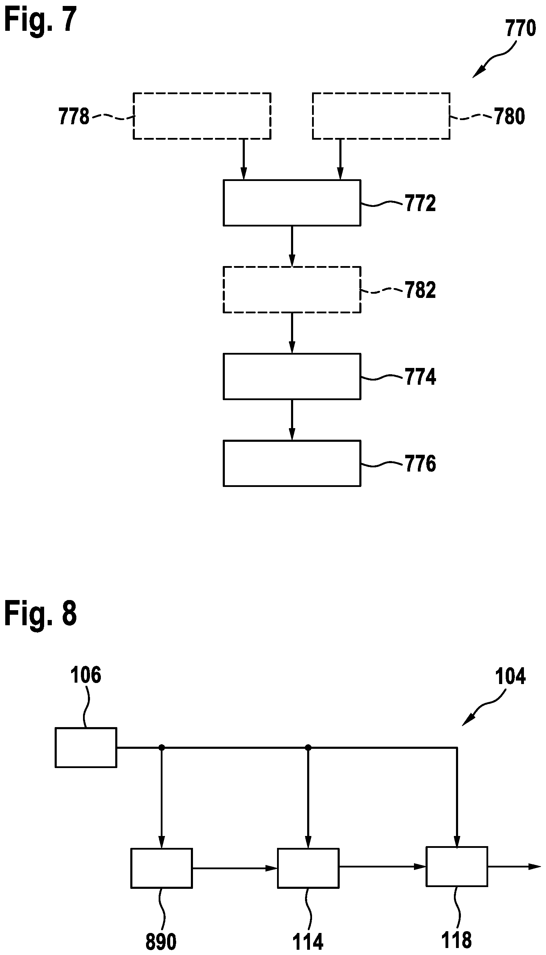

Fig. 7 zeigt ein Ablaufdiagramm eines Verfahrens 770 gemäß einem Ausführungsbeispiel der vorliegenden Erfindung. Das Verfahren kann beispielsweise auf der in Fig. 1 dargestellten Vorrichtung 104 ausgeführt werden. Das Verfahren 770 zum Erkennen von Sekundenschlaf eines Fahrers eines Fahrzeugs umfasst zumindest einen Schritt 772 des Einlesens, einen Schritt 774 des Klassierens sowie einen Schritt 776 des Ermittelns. Im Schritt 772 des Einlesens wird eine Augenschlussinformation über einen Augenparameter des Fahrers eingelesen. Die Augenschlussinformation repräsentiert eine erste Augenlidposition für ein maximales Augenöffnungsniveau und eine zweite Augenlidposition für ein minimales Augenöffnungsniveau für den Fahrer. So sind sozusagen die zwei Endpositionen für das Augenlid des Fahrers definiert und eine aktuelle Augenlidposition des Augenlids kann hierzu relativ bestimmt werden und als Augenöffnungsniveau dargestellt werden. So wird ein zwischen zwei Personen respektive Fahrern vergleichbarer Wert dargestellt.

Im Schritt 774 des Klassierens wird die aktuelle Augenlidposition unter Verwendung der Augenschlussinformation klassiert, um eine Augenöffnungsinformation zu erhalten, die einen offenen Zustand der Augen oder einen geschlossenen Zustand der Augen repräsentiert. Dabei wird in einem Ausführungsbeispiel unter Verwendung der aktuellen Augenlidposition und der Augenschlussinformation ein Augenöffnungsniveau bestimmt und dieses mit einem Schwellwert verglichen. Dabei variiert der Schwellwert in unterschiedlichen Ausführungsbeispielen. Beispielsweise wird bei einem Augenöffnungsniveau von weniger als 50% ein geschlossener Zustand der Augen definiert. Der Schwellwert kann zwischen 0% und 70% liegen. Vorteilhaft ist ein Schwellwert kleiner 50%, oder insbesondere kleiner 30%.

Im Schritt 776 des Ermittelns wird ein Schlaferkennungswert ermittelt. Der Schlaferkennungswert repräsentiert ein Maß oder eine Wahrscheinlichkeit für ein Auftreten eines Sekundenschlafs. In einem Ausführungsbeispiel wird der Schlaferkennungswert unter Verwendung der aktuellen Augenlidposition oder unter Verwendung des aktuellen Augenöffnungsniveaus ermittelt. Dabei kann der Schlaferkennungswert unter Verwendung einer Blickrichtung des Fahrers oder einer Augenöffnungsgeschwindigkeit bestimmt werden. Zur Verbesserung der Robustheit des Schlaferkennungswerts werden zumindest zwei der genannten Informationen oder Signale zum Ermitteln des Schlaferkennungswerts verwendet.

In einem Ausführungsbeispiel weist das Verfahren einen optionalen Schritt 778 des Identifizierens auf. Im Schritt des Identifizierens wird der Fahrer identifiziert. Dies kann optisch über eine Bilderfassung und Bilderkennung erfolgen. Der Fahrer wird alternativ über einen Fingerabdruck, Irisscan, die Eingabe eines Codes oder durch einen persönlichen Schlüssel oder Ähnliches identifiziert. Anschließend wird die Augenschlussinformation unter Verwendung einer Information über den identifizierten Fahrer bereitgestellt oder im Schritt 772 unter Verwendung der Information über den identifizierten Fahrer aus einer Datenbank eingelesen.

In einem Ausführungsbeispiel weist das Verfahren 770 vor dem Schritt 772 des Einlesens einen optionalen Schritt 780 des Auswertens auf, in dem die aktuelle Augenlidposition über einen vorbestimmten Zeitraum ausgewertet wird, um die Augenschlussinformation zu bestimmen.

In einem besonderen Ausführungsbeispiel weist das Verfahren einen optionalen Schritt 782 zwischen dem Schritt 772 des Einlesens und dem Schritt 774 des Klassierens einen Schritt 782 des Lernens auf. Im Schritt 782 des Lernens wird die Augenschlussinformation unter Verwendung der aktuellen Augenlidposition angepasst. So kann das maximale Augenöffnungsniveau erhöht werden, wenn die aktuelle Augenlidposition eine größere Augenöffnung repräsentiert als das maximale Augenöffnungsniveau. Gleiches gilt analog für das minimale Augenöffnungsniveau.

Optional wird im Schritt 774 des Klassierens die die Augenöffnungsinformation unter Verwendung eines Blickrichtungssignals klassiert, um zwischen offenen Augen und geschlossenen Augen zu unterscheiden. Wenn kein Blickrichtungssignal vorhanden ist, kann dies auf geschlossene Augen hinweisen.

Im Schritt 776 des Ermittelns kann der Schlaferkennungswert unter Verwendung einer Information über die Anzahl des Schließens oder des Wechsels vom Zustand offener Augen und dem Zustand geschlossener Augen ermittelt werden. So kann eine vorbestimmte Anzahl von Vorgängen des Augen Schließens in einem vorbestimmten Zeitintervall auf einen Sekundenschlaf hinweisen. Weiterhin wird optional in einem Ausführungsbeispiel der Schlaferkennungswert unter Verwendung einer Lidschlussdynamik oder einer Lidschlussbeschleunigung ermittelt.

Fig. 8 zeigt ein Blockdiagramm einer Vorrichtung 104 gemäß einem Ausführungsbeispiel der vorliegenden Erfindung. Die Vorrichtung 104 umfasst in dem dargestellten Ausführungsbeispiel drei Blöcke 890, 114, 118, die mit einer Augenparameter-Erfassungseinrichtung 106 verbunden sind.

Die Vorrichtung 104 kann als ein System zur Detektion von Sekundenschlaf aus Lidschlusssignalen bezeichnet werden. Vorteilhaft ist die Vorrichtung 104 ausgebildet, Sekundenschlaf als eigenständige Gefahr zu erkennen und eine rechtzeitige Warnung bereitzustellen. Vorteilhaft wird Sekundenschlaf von der Vorrichtung 104 erkannt und der Fahrer aus seinem Schlaf mithilfe einer Assistenzfunktion geweckt. Vorteilhaft wird das Risiko beziehungsweise die Gefahr eines Unfalls wegen Sekundenschlaf verhindert oder verringert.

Der Block 106 repräsentiert eine Vorverarbeitung, um geschlossene Augen zu erkennen. Dies wird auch als Eye Closure Preprocessing (ECP) bezeichnet. Dabei werden je nach Ausführungsbeispiel unter anderem die folgenden Größen bestimmt und entsprechende Signale oder Informationen bereitgestellt: momentane Augenöffnung (= Abstand von oberem Augenlid zu unterem Augenlid in [m]), Geschwindigkeit v_{Auge} der Augenöffnung [m/s], Beschleunigung a_{Auge} der Augenöffnung [m/s²] sowie momentanes Augenöffnungsniveau (= Augenöffnung ohne Berücksichtigung von Blinzeln).

Der Block 890 repräsentiert ein Bestimmen eines personenbezogenen Augenschließverhaltens, auch als Personal Eye Closure Behavior oder PEC bezeichnet. Dabei werden die persönlichen Augenöffnungsgrenzen eines Fahrers detektiert. Zur Initialisierung kann zu Beginn einer Fahrt für eine kurze Dauer (beispielsweise zwei oder fünf Minuten) das Augenschlussverhalten des Fahrers beobachtet werden. So wird das maximale Augenöffnungsniveau beispielsweise durch Maximalwertbildung des Augenschlusssignals zu Beginn der Fahrt berechnet sowie das minimale Augenöffnungsniveau beispielsweise durch Minimalwertbildung des Augenschlusssignals zu Beginn der Fahrt berechnet. Sobald ein Fahrerwechsel erkannt wird, wird die Initialisierung neu gestartet. Dies kann beispielsweise durch Identifikation des Fahrers aus dem Kamerabild erkannt werden. Es könnten aber auch Signale des Gurtschlosses oder der Fahrertür sowie das Geschwindigkeits-Signal in Betracht gezogen werden.

Im Block 890 werden persönliche Charakteristika des Fahrers identifiziert. Diese sind von physiologischen Gegebenheiten des Kopfes abhängig und daher im weiteren Verlauf der Fahrt konstant. Konkret werden diejenigen Augenöffnungsniveaus berechnet, bei denen das Auge als 100% offen und 0% offen charakterisiert werden können. Optional kann eine Driver-ID verwendet werden. So kann eine Identifizierung des Fahrers anhand des Videobildes erfolgen. Wenn der Fahrer identifiziert wurde, können gegebenenfalls schon gespeicherte Werte des jeweiligen Fahrers wieder aufgerufen werden und der Identifikationsschritt kann entfallen.

Auch wenn man davon ausgehen kann, dass ein Fahrer zu Beginn einer Fahrt wach ist und seine Augen 100% offen sind, kann es Fälle geben, in denen eine nachträgliche Erhöhung des 100%-Niveaus sinnvoll ist (beispielsweise Fahrer kneift zu Beginn der Fahrt ständig die Augen zu, insbesondere bedingt durch externe Lichtverhältnisse). Dies kann mit einem lernenden, sich anpassenden Verfahren berücksichtigt werden.

Der Block 890 wird durch die Schritte 772, 778, 789, 782 des in Fig. 7 beschriebenen Verfahrens beschrieben. In Fig. 1 ist hier die Schnittstelle 112 dargestellt und beschrieben, die einen Teil der hier dargestellten Funktionen repräsentiert.

Im Block 114 findet eine Erkennung statt, ob die Augen des Fahrers geschlossen sind. Dies wird auch als Eyes Closed Detection oder ECD bezeichnet. Aus dem momentanen Öffnungsgrad, Augenöffnungsniveau oder aktuelle Augenlidposition der Augen sowie den in Block 890 berechneten persönlichen Niveaus kann ein momentaner prozentualer Öffnungsgrad berechnet werden. Sobald der momentane prozentuale Öffnungsgrad einen bestimmten Grenzwert unterschreitet (beispielsweise 50 %), werden die Augen als geschlossen deklariert.

Optional wird im Block 114 auch das Blickrichtungs-Signal eines Eye-Trackers verwendet, beziehungsweise die Verfügbarkeit des Blickrichtungs-Signals überwacht: Solange eine Blickrichtung erkannt wird und verfügbar ist, sind die Augen offen. Dieses Verfahren erhöht die Klassifizierungsgüte.

Der Block 118 repräsentiert eine Sekundenschlaferkennung oder Microsleep Detection beziehungsweise MSD. In einem ersten Ausführungsbeispiel wird die Dauer von geschlossenen Augen berechnet. Dabei wird Sekundenschlaf detektiert, sobald die Dauer einen bestimmten Grenzwert (beispielsweise 1,5 s) überschreitet. Dies wird auch in Fig. 3 beispielhaft dargestellt.

Alternativ oder ergänzend werden typische Bewegungsmuster bei Sekundenschlaf erkannt, um diesen bereits vor oder während des Eintretens von Sekundenschlaf zu erkennen. Somit ist mit diesem Ansatz grundsätzlich eine frühere Warnung möglich, als mit dem im Absatz zuvor beschriebenen Ausführungsbeispiel der Sekundenschlaferkennung. Dabei können sowohl das Augenöffnungs-Signal als auch andere Signale wie beispielsweise die Blickrichtung in Betracht gezogen werden. Es sind grundsätzlich verschiedene Bewegungsmuster denkbar: langsamer Augenschluss, Detektion von "Kampf mit zufallenden Augen" oder abdriftende Pupillen.

Zur Detektion von langsamem Augenschluss werden folgende Parameter verwendet: Augenöffnungsniveau und Augenöffnungsgeschwindigkeit. Sobald das Geschwindigkeits-Signal für einen längeren Zeitraum (beispielsweise 0,5 Sekunden) unterhalb oder innerhalb von einem bestimmten Band liegt (beispielsweise -0,1 m/s < aktuelle Geschwindigkeit (v_{Auge}) < -0.05 m/s) kann bereits frühzeitig Sekundenschlaf erkannt werden.

Zur Detektion von Kampf mit zufallenden Augen werden folgende Parameter verwendet: Augenöffnungsniveau sowie Augenöffnungsgeschwindigkeit. Ein "Kampf mit zufallenden Augen" wird durch Erkennung von häufigem Schließen und Öffnen der Augen in Verbindung mit einer langsamen Augenöffnungsgeschwindigkeit erkannt. Ein entsprechendes Signal ist in Fig. 5 beispielhaft dargestellt.

Zur Detektion von abdriftenden Pupillen werden folgende Parameter verwendet: Augenöffnungsniveau sowie Blickrichtung. Zur Detektion von abdriftenden Pupillen werden Bewegungsmuster des Blickrichtungs-Signals verwendet. Diese können auch in Verbindung mit dem momentanen Augenöffnungsniveau für eine bessere Detektion verwendet werden. Fig. 6 zeigt ein Beispiel für einen horizontalen Verlauf der Blickrichtung bei einem solchen Abdriften der Pupillen.

Die Vorrichtung 104 ist ausgebildet, singuläre Sekundenschlaf-Events zu erkennen. In einem Ausführungsbeispiel wird ein Sekundenschlaf-Event erkannt, wenn die Augen länger als eine vorbestimmte Zeitdauer geschlossen sind, dann liegt Sekundenschlaf oder Schlaf vor.

In einem Ausführungsbeispiel wird eine frühe Erkennung von Sekundenschlaf-Events erzielt. Beispielsweise wird die Lidschlussdynamik verwendet, um bestimmte charakteristische Merkmale von Sekundenschlaf bereits beim Schließen der Augen zu erkennen. Mit diesem Verfahren ist eine frühere Warnung möglich. Damit einher geht ein hoher Gewinn an Sicherheit. Weiter werden verschiedene Muster vorgestellt. Die Erkennung basiert auf verschiedenen Größen (beispielsweise Eye Closure Speed).

Von Vorteil ist eine Ermittlung eines festen Wertes des Augenöffnungsniveaus für jeden Fahrer.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (700) zum Erkennen von Sekundenschlaf eines Fahrers (102) eines Fahrzeugs (100), wobei das Verfahren (700) die folgenden Schritte aufweist:
Einlesen (772) einer Augenschlussinformation (110) über einen Augenparameter des Fahrers (102), wobei die Augenschlussinformation (110) eine erste Augenlidposition (240) für ein maximales Augenöffnungsniveau und/oder eine zweite Augenlidposition (242) für ein minimales Augenöffnungsniveau für den Fahrer (102) repräsentiert;
Klassieren (774) einer aktuellen Augenlidposition (244) eines Augenlids (232) des Fahrers (102) unter Verwendung der Augenschlussinformation (110), um eine Augenöffnungsinformation (116) zu erhalten, die einen offenen Zustand der Augen (108) oder einen geschlossenen Zustand der Augen (108) repräsentiert; und
Ermitteln (776) eines Schlaferkennungswerts (120), der eine Gefahr für ein Auftreten eines Sekundenschlafs repräsentiert, wobei der Schlaferkennungswert (120) unter Verwendung der aktuellen Augenlidposition (244) und/oder der Augenöffnungsinformation (116) ermittelt wird, wobei der Sekundenschlaf erkannt wird, wenn der Schlaferkennungswert (120) einen Schwellwert zumindest während einer vorbestimmten Zeitdauer überschreitet
**dadurch gekennzeichnet, dass**
vor dem Schritt (772) des Einlesens in einem Schritt (778) des Identifizierens der Fahrer (102) identifiziert wird und die Augenschlussinformation (110) unter Verwendung einer Information über den identifizierten Fahrer (102), insbesondere aus einer Datenbank, bereitgestellt wird.

2. Verfahren (700) gemäß Anspruch 1, bei dem vor dem Schritt (772) des Einlesens in einem Schritt (780) des Auswertens die aktuelle Augenlidposition (244) über einen Initialisierungszeitraum ausgewertet wird, um die Augenschlussinformation (110) zu bestimmen.

3. Verfahren (700) gemäß einem der vorangegangenen Ansprüche, bei dem im Schritt (776) des Ermittelns der Schlaferkennungswert (120) unter Verwendung einer Anzahl einer geschlossene Augen repräsentierenden Augenöffnungsinformation (116) für den Fahrer (102) während der Zeitdauer und/oder einer Dauer geschlossene Augen repräsentierenden Augenöffnungsinformation (116) während der Zeitdauer ermittelt wird.

4. Verfahren (700) gemäß einem der vorangegangenen Ansprüche, bei dem im Schritt (776) des Ermittelns der Schlaferkennungswert (120) unter Verwendung einer Lidschlussdynamik und/oder einer Lidschlussbeschleunigung (a_{Auge}) ermittelt wird.

5. Vorrichtung (104), die ausgebildet ist, um alle Schritte eines Verfahrens (700) gemäß einem der vorangegangenen Ansprüche durchzuführen.

6. Computerprogramm, das dazu eingerichtet ist, alle Schritte eines Verfahrens (700) gemäß einem der vorangegangenen Ansprüche durchzuführen, umzusetzen und/oder anzusteuern.

7. Maschinenlesbares Speichermedium mit einem darauf gespeicherten Computerprogramm nach Anspruch 6.

## Claims

1. Method (700) for identifying microsleep of a driver (102) of a vehicle (100), the method (700) including the following steps:
reading (772) an eye closure information item (110) about an eye parameter of the driver (102), wherein the eye closure information item (110) represents, for the driver (102), a first eyelid position (240) for the eye being open a maximum level and/or a second eyelid position (242) for the eye being open a minimum level;
classifying (774) a current eyelid position (244) of an eyelid (232) of the driver (102) using the eye closure information item (110) in order to obtain an open eye information item (116), which represents an open state of the eyes (108) or a closed state of the eyes (108); and
establishing (776) a sleep identification value (120), which represents a risk of an occurrence of microsleep, wherein the sleep identification value (120) is established using the current eyelid position (244) and/or the open eye information item (116), wherein the microsleep is identified if the sleep identification value (120) exceeds a threshold during at least a predetermined time interval,
**characterized in that**
the driver (102) is identified in an identification step (778) before the reading step (772) and the eye closure information item (110) is provided using an information item about the identified driver (102), in particular from a database.

2. Method (700) according to Claim 1, wherein, in order to determine the eye closure information item (110), the current eyelid position (244) is evaluated over an initialization time period during an evaluating step (780) before the reading step (772).

3. Method (700) according to any one of the preceding claims, wherein, in establishment step (776), the sleep identification value (120) is established using a number of open eye information items (116) representing a closed eye for the driver (102) during the time duration and/or using an open eye information item (116) representing a duration of closed eyes during the time duration.

4. Method (700) according to any one of the preceding claims, wherein, in establishment step (776), the sleep identification value (120) is established using lid closure dynamics and/or a lid closure acceleration (a_{Auge}).

5. Apparatus (104), embodied to carry out all steps of a method (700) according to any one of the preceding claims.

6. Computer program, configured to carry out, implement and/or actuate all steps of a method (700) according to any one of the preceding claims.

7. Machine-readable storage medium having a computer program according to Claim 6 stored thereon.

## Revendications

1. Procédé (700) de reconnaissance d'un assoupissement d'un conducteur (102) d'un véhicule (100), le procédé (700) comprenant les étapes suivantes :
relevé (772) d'une information de fermeture d'oeil (110) par le biais d'un paramètre des yeux du conducteur (102), l'information de fermeture d'oeil (110) représentant une première position de paupière (240) pour un niveau d'ouverture d'oeil maximal et/ou une deuxième position de paupière (242) pour un niveau d'ouverture d'oeil minimal pour le conducteur (102) ;
classification (774) d'une position de paupière actuelle (244) d'une paupière (232) du conducteur (102) en utilisant l'information de fermeture d'oeil (110) afin d'obtenir une information d'ouverture d'oeil (116) qui représente un état ouvert des yeux (108) ou un état fermé des yeux (108) ; et
détermination (776) d'une valeur distinctive de sommeil (120) qui représente un risque de survenance d'un assoupissement, la valeur distinctive de sommeil (120) étant déterminée en utilisant la position de paupière actuelle (244) et/ou l'information d'ouverture d'oeil (116), l'assoupissement étant reconnu lorsque la valeur distinctive de sommeil (120) dépasse une valeur de seuil au moins pendant une durée prédéterminée **caractérisé en ce que**
avant l'étape (772) de relevé, le conducteur (102) est identifié dans une étape (778) d'identification et l'information de fermeture d'oeil (110) est fournie en utilisant une information à propos du conducteur (102) identifié, notamment issue d'une base de données.

2. Procédé (700) selon la revendication 1, selon lequel la position de paupière actuelle (244) est interprétée sur une période d'initialisation dans une étape (780) d'interprétation avant l'étape (772) de relevé afin de définir l'information de fermeture d'oeil (110) .

3. Procédé (700) selon l'une des revendications précédentes, selon lequel la valeur distinctive de sommeil (120) est déterminée dans l'étape (776) de détermination en utilisant un certain nombre d'informations d'ouverture d'oeil (116) représentant un oeil fermé pour le conducteur (102) pendant la durée et/ou d'informations d'ouverture d'oeil (116) représentant une durée d'oeil fermé pendant la durée.

4. Procédé (700) selon l'une des revendications précédentes, selon lequel la valeur distinctive de sommeil (120) est déterminée dans l'étape (776) de détermination en utilisant une dynamique de fermeture de paupière et/ou une accélération de fermeture de paupière (a_{Auge}).

5. Dispositif (104) qui est configuré pour exécuter toutes les étapes d'un procédé (700) selon l'une des revendications précédentes.

6. Programme informatique qui est conçu pour exécuter, mettre en oeuvre et/ou commander toutes les étapes d'un procédé (700) selon l'une des revendications précédentes.

7. Support d'enregistrement lisible par machine sur lequel est enregistré un programme informatique selon la revendication 6.
